# EUROPÄISCHE PATENTANMELDUNG

(11) **EP 1 739 356 A1**
(43) Veröffentlichungstag der Anmeldung: **03.01.2007**
(21) Anmeldenummer: 05014376.7
(22) Anmeldetag: 01.07.2005
(51) Int. Cl.: F23R 3/00, F02C 7/24, C04B 38/00

(54) **Formmasse zum Herstellen einer feuerfesten Auskleidung**

(71) Anmelder: SIEMENS AKTIENGESELLSCHAFT, 80333 München (DE)
(72) Erfinder: Grote, Holger, 53121 Bonn (DE); Kollenberg, Wolfgang, Dr., 50321 Brühl (DE); Nikolay, Dieter, 46745 Bell (DE); Tertilt, Marc, 45529 Hattingen (DE)

(57) **Zusammenfassung**

Eine Formmasse zum Herstellen einer feuerfesten Auskleidung, insbesondere für eine Brennkammer einer stationären Gasturbine, ist erfindungsgemäß insbesondere dadurch gekennzeichnet, dass die Formmasse mit einem Gewichtsanteil von mehr als zirka 50% Aluminiumoxid und einem Gewichtsanteil von weniger als zirka 50% Aluminiumsilicat gebildet ist.

## Beschreibung

Die Erfindung betrifft eine Formmasse zum Herstellen einer feuerfesten Auskleidung, insbesondere für eine Brennkammer einer stationären Gasturbine. Ferner betrifft die Erfindung ein gebranntes Formteil, das auf der Grundlage einer derartigen Formmasse hergestellt worden ist, eine zugehörige feuerfeste Auskleidung sowie schließlich auch ein Verfahren zum Herstellen eines gebrannten Formteils einer feuerfesten Auskleidung.

Im Bereich der Brennkammertechnik müssen, wie beispielsweise bei Gasturbinen-Brennkammern, die Wände von Hochtemperaturreaktoren mit geeigneten Auskleidungen bzw. Abschirmungen geschützt werden, damit insbesondere sich dahinter befindende tragende Strukturen gegen Heißgasangriff geschützt sind. Als Abschirmung sind keramische Materialien in der Regel besser geeignet als metallische Werkstoffe, weil sie temperaturbeständiger sowie korrosionsbeständiger sind und eine niedrigere Wärmeleitfähigkeit aufweisen.

Die keramischen Auskleidungen, welche oftmals auch als keramische Hitzeschilde bezeichnet werden, sind in der Regel durch einen Sinterungsprozess hergestellt worden, bei dem dann auch die schützenden Eigenschaften der Keramiken festgelegt wurden.

An die keramischen Hitzeschilde werden ferner hohe Anforderungen hinsichtlich ihrer mechanischen Belastbarkeit gestellt und es wird verstärkt versucht hier Verbesserungen durch Herstellen von Composite-Bauteilen, wie beispielsweise mit faserverstärkten Bauteilen auf Basis CMC (ceramic matrix composites), oder mit Strukturkeramik-Bauteilen oder gradierten Bauteilen besonders gute mechanische Eigenschaften zu erzielen.

Eine Aufgabe der Erfindung ist es, eine Formmasse sowie ein daraus gebranntes Formteil für eine feuerfeste Auskleidung der eingangs genannten Art bereitzustellen, welche mit einer z.B. vergleichsweise geringen Sintertemperatur verarbeitet werden kann und dadurch neue Möglichkeiten bei der Entwicklung von hochtemperaturbeständigen Composite-Bauteilen eröffnet.

Die Formmasse muss die Anforderungen an keramische Bauteile für den Einsatz in stationären Gasturbinen im Heißgaspfad erfüllen.

Die Aufgabe ist erfindungsgemäß mit einer Formmasse zum Herstellen einer feuerfesten Auskleidung gelöst, die mit einem Gewichtsanteil von mehr als zirka 50% Aluminiumoxid und einem Gewichtsanteil von weniger 50% Aluminiumsilikat gebildet ist. Ferner ist die Aufgabe mit einem gebrannten Formteil für eine feuerfeste Auskleidung gelöst, das einen Gewichtsanteil von mehr als zirka 50% und weniger als zirka 90% Aluminiumoxid und/oder einen Gewichtsanteil von mehr als zirka 10% und weniger als zirka 50% Aluminiumsilikat aufweist. Darüber hinaus ist die Aufgabe auch erfindungsgemäß mit einem Verfahren zum Herstellen eines gebrannten Formteils einer feuerfesten Auskleidung gelöst, welches die folgenden Schritte umfasst: Herstellen einer Formmasse mit mindestens den Anteilen Aluminiumoxid und Aluminiumsilikat unter Zugabe kolloidaler Kieselsäurelösung, Vergießen der Formmasse unter Vibration, sprunghaftes Absenken der Temperatur der Formmasse, sowie Trocknen und Brennen der vergossenen Formmasse. Die Formmasse kann weiterhin einen Gewichtsanteil von weniger als zirka 30% enthalten.

Die erfindungsgemäß aus den genannten bestimmten Gewichtsanteilen von Aluminiumoxid bzw. Aluminiumsilikat zusammengesetzte Formmasse bildet ein Grundmaterial, welches besonders vorteilhaft durch Zugabe von kolloidaler Kieselsäurelösung in einem so genannten Sol-Gel-Prozess verfestigt und ferner mittels Gießen unter Vibration verarbeitet werden kann. Die dabei zunächst als Sol bzw. kolloidale Lösung vorliegende Kieselsäure wird durch das genannte sprunghafte Absenken der Temperatur in ein Gel überführt und damit die Formmasse, welche auch als Gießmasse oder Vibrationsmasse bezeichnet werden kann, verfestigt. Der eigentliche Trocknungs- und Sinterprozess kann nachfolgend bei vergleichsweise geringen Brenntemperaturen erfolgen, wie unten noch genauer erläutert werden wird.

Besonders vorteilhaft wird bei der erfindungsgemäßen Formmasse als Aluminiumoxid Korund, d.h. Aluminiumoxid in trigonaler Struktur mit der chemischen Formel Al₂O₃, insbesondere bei einem Gewichtsanteil zwischen zirka 50% und 90% verwendet.

Der Gewichtsanteil des verwendeten Aluminiumsilikats beträgt besonders vorteilhaft zwischen zirka 10% und 50%, am Bevorzugtesten weniger als zirka 45%. Das Aluminiumsilikat ist dabei vorteilhaft Mullit mit der chemischen Formel 3Al₂O₃-2SiO₂ oder 2Al₂O₃-1SiO₂.

Ferner sollte die erfindungsgemäße Formmasse vorteilhaft frei von ungebundenem Siliziumoxid, SiO₂ sein oder der Gewichtsanteil von derartigem Siliziumoxid zumindest weniger als zirka 5% sein. Schließlich ist es auch von Vorteil, wenn die Formmasse frei von Calcium-Aluminaten ist.

Der Gewichtsanteil der erfindungsgemäß zugefügten kolloidalen Kieselsäurelösung sollte vorteilhaft weniger als zirka 10% betragen. Ferner sollte die kolloidale Kieselsäurelösung einen Feststoffgehalt von mindestens zirka 30 Gewichtsprozent aufweisen.

Um eine gute Verarbeitbarkeit zu erzielen sollte der Formmasse bevorzugt eine Flüssigkeit, insbesondere Wasser, mit einem Gewichtsanteil von mehr als zirka 1% und weniger als zirka 10% zugegeben sein.

Die maximale Korngröße sollte typischerweise zwischen zirka 20 und zirka 5 mm liegen. Der Gewichtsanteil dieser Kornfraktion sollte weniger als zirka 25% sein.

Alternativ oder zusätzlich sollte die erfindungsgemäße Formmasse mit einem Gewichtsanteil von weniger als zirka 30%, insbesondere von weniger als zirka 25% reaktiver Tonerde ergänzt sein.

Das erfindungsgemäß gebrannte Formteil sollte in seiner Zusammensetzung Gewichtsanteile aufweisen, welche im Wesentlichen denen der oben genannten Formmassen entsprechen. Die offene Porosität des gebrannten Formteils sollte mehr als zirka 10%, insbesondere mehr als zirka 15% und weniger als zirka 35% betragen. Die erfindungsgemäß vorteilhaft angestrebte Rohdichte des gebrannten Formteils beträgt weniger als zirka 3,5 g/cm³, insbesondere weniger als zirka 3,0 g/cm³.

Hinsichtlich der gewünschten mechanischen Eigenschaften sollte das erfindungsgemäße gebrannte Formteil auf eine mittlere Biegefestigkeit bei Normalbedingungen von mehr als zirka 7,0 MPa eingestellt sein. Die angegebene mittlere Biegefestigkeit wird dabei mit einem 3-Punkt-Biegeversuch gemessen.

Das derart aus einer erfindungsgemäßen Formmasse hergestellte Formteil kann besonders vorteilhaft als feuerfeste Auskleidung bei Brennkammern von stationären Gasturbinen verwendet werden. Um es herzustellen, wird, wie oben bereits erwähnt, die Formmasse unter Vibration durch Verfestigung auf der Basis von kolloidaler Kieselsäurelösung hergestellt. Um diese Verfestigung zu erreichen wird erfindungsgemäß bevorzugt die Umgebungstemperatur der Formmasse sprunghaft auf eine Temperatur von weniger als zirka 0°C abgesenkt und dort insbesondere über einen Zeitraum von mehr als zirka 15 min und weniger als zirka 2,5 h gehalten. Besonders bevorzugt wird eine Abkühltemperatur der Umgebung von zirka -20°C bis zirka -40°C.

Die fertig vergossene Formmasse wird erfindungsgemäß bevorzugt bei einer Temperatur von zwischen zirka 1300°C und zirka 1650°C gebrannt. Für das Brennen einer Monolith-Keramik wird innerhalb dieses Temperaturbereichs eine Temperatur von zwischen zirka 1350°C und zirka 1650°C bevorzugt. Eine faserverstärkte Keramik wird bevorzugt bei einer Temperatur zwischen zirka 1300°C und zirka 1400°C gebrannt. Für Strukturkeramik wird erfindungsgemäß eine Brenntemperatur von zwischen zirka 1300°C und zirka 1600°C bevorzugt.

Nachfolgend wird ein Ausführungsbeispiel einer erfindungsgemäßen Formmasse, eines daraus hergestellten gebrannten Formteils, einer damit gebildeten feuerfesten Auskleidung sowie ein zugehöriges Verfahren zum Herstellen der Auskleidung anhand der beigefügten schematischen Zeichnungen näher erläutert.

Die Fig. zeigt ein schematisches Ablaufdiagramm eines Herstellungsverfahrens einer feuerfesten Auskleidung inklusive der Vorbereitung der verwendeten Formmasse.

Ein als feuerfeste Auskleidung einer Brennkammer einer stationären Gasturbine vorgesehenes Formteil wird gemäß der Fig. aus einer Formmasse hergestellt, welche in einem ersten Arbeitsschritt aus im Wesentlichen fünf Bestandteilen zusammengemischt wird.

Diese fünf Bestandteile sind in der Fig. mit den Bezugszeichen 10, 12, 14, 16 und 18 bezeichnet und beinhalten in dieser Reihenfolge Korund (Al₂O₃) , Mullit (2Al₂O₃-1SiO₂), Kieselsäure (Si(OH)₄), Wasser (H₂O) sowie reaktive Tonerde. Die Gewichtsanteile dieser Materialien betragen beim Korund als Aluminiumoxid zwischen zirka 55% und 70%, beim Mullit als Aluminiumsilikat zwischen zirka 30% und 45% und beim Wasser zwischen zirka 4% und 7%. Die Kieselsäure ist als Sol- bzw. kolloidale Lösung mit einem Gewichtanteil von zwischen zirka 4% und 8% zugegeben. Der Anteil an reaktiver Tonerde beträgt zwischen zirka 15% und 30%.

Die genannten Bestandteile werden in einem in der Fig. mit Bezugszeichen 20 beschrifteten Mischvorgang zu einer Formmasse zusammengefügt, welche nachfolgend in einem mit Bezugszeichen 22 bezeichneten Vergießvorgang unter Vibration in einer Gießform vergossen wird.

Die derart vorbereitete Gießform wird ausgehend von Raumtemperatur sprunghaft abgekühlt, indem sie einer Atmosphäre mit einer Temperatur von zirka -25°C ausgesetzt wird. Durch diese sprunghafte Abkühlung der sich in der Gießform befindenden Formmasse verfestigt sich die darin als Sol vorliegende Kieselsäure zu einem Gel. Dabei wird auch die Formmasse insgesamt verfestigt und in besonders vorteilhafter Weise für einen mit Bezugszeichen 26 bezeichneten letzten Arbeitsschritt des Trocknens und Brennens vorbereitet.

Bei diesem Arbeitsschritt 26 wird die Formmasse bei einer Sintertemperatur von zwischen zirka 1300°C und zirka 1600°C gebrannt. Aufgrund dieser vergleichsweise niedrigen Brenntemperatur können sich in der Formmasse eingesetzte Faserverstärkungen befinden, so dass insgesamt eine faserverstärkte Keramik hergestellt werden kann.

Die hergestellte Keramik weist besonders vorteilhafte mechanische Eigenschaften mit besonders geringer Neigung zur Ausbildung von thermischen Rissen auf. Dies beruht insbesondere darauf, dass in der Keramik durch den genannten Sol-Gel-Prozess und auch aufgrund des hohen Aluminiumoxidanteils ein spezielles Mikrorissgefüge geschaffen worden ist, welches unter anderem beispielsweise zu einer starken Verminderung der Risslängen von Kantenrissen führt.

Auf diese Weise kann mit dem erfindungsgemäßen Vorgehen das Verlustrisiko von keramischen Hitzeschildern an der Auskleidung reduziert und die Anzahl der Wartungs- und Austauschzyklen der Hitzeschilder verringert werden. Insgesamt kann eine höhere Lebensdauer erreicht werden.

Darüber hinaus ist als besonderer Vorteil der Erfindung noch zu nennen, dass die Gießmasse insgesamt zementfrei ist (also im Wesentlichen kein CaO aufweist) und sich ferner aufgrund der niedrigen Sintertemperatur auch Kostenvorteile beim Herstellungsprozess ergeben.

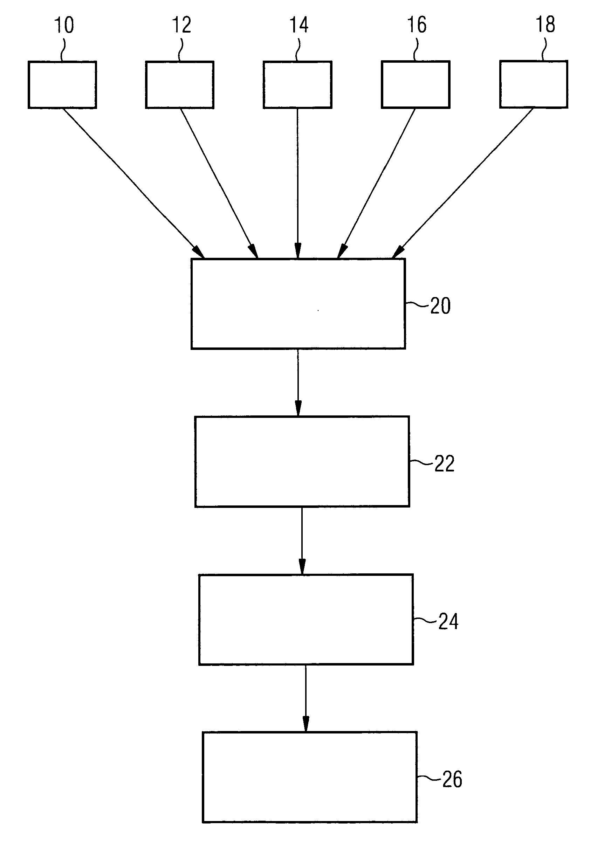

## Patentansprüche

1. Formmasse zum Herstellen einer feuerfesten Auskleidung, insbesondere für eine Brennkammer einer stationären Gasturbine,
wobei die Formmasse mit einem Gewichtsanteil von mehr als zirka 50% Aluminiumoxid (10) und einem Gewichtsanteil von weniger als zirka 50% Aluminiumsilicat (12) gebildet ist.

2. Formmasse nach Anspruch 1,
mit einem Gewichtsanteil von weniger als zirka 10% kolloidaler Kieselsäurelösung (14).

3. Formmasse nach Anspruch 2,
bei der die kolloidale Kieselsäurelösung (14) einen Gewichtsanteil von mehr als zirka 30% Feststoff enthält.

4. Formmasse nach einem der Ansprüche 1 bis 3,
bei der eine Flüssigkeit, insbesondere Wasser (16), mit einem Gewichtsanteil von mehr als zirka 1% und weniger als zirka 10% zugegeben ist.

5. Formmasse nach einem der Ansprüche 1 bis 4,
mit einem Gewichtsanteil von weniger als zirka 30%, insbesondere von weniger als zirka 25% reaktiver Tonerde (18).

6. Gebranntes Formteil für eine feuerfeste Auskleidung, insbesondere einer Brennkammer einer stationären Gasturbine, mit einem Gewichtsanteil von mehr als zirka 50% und weniger als zirka 90% Aluminiumoxid (10).

7. Gebranntes Formteil für eine feuerfeste Auskleidung, insbesondere einer Brennkammer einer stationären Gasturbine, mit einem Gewichtsanteil von mehr als zirka 10% und weniger als zirka 50% Aluminiumsilicat (12).

8. Gebranntes Formteil nach Anspruch 6 oder 7,
mit einer offenen Porosität von mehr als zirka 10%, insbesondere von mehr als zirka 15% und weniger als zirka 35%.

9. Gebranntes Formteil nach einem der Ansprüche 6 bis 8,
mit einer Rohdichte von weniger als zirka 3,5 g/cm³, insbesondere von weniger als zirka 3,0 g/cm³.

10. Gebranntes Formteil nach einem der Ansprüche 6 bis 9, dessen mittlere Biegefestigkeit bei Normalbedingungen auf mehr als zirka 7,0 MPa eingestellt ist.

11. Feuerfeste Auskleidung einer Brennkammer, insbesondere einer stationären Gasturbine, mit mindestens einem gebrannten Formteil nach einem der Ansprüche 6 bis 10.

12. Verfahren zum Herstellen eines gebrannten Formteils einer feuerfesten Auskleidung, insbesondere für eine Brennkammer einer stationären Gasturbine, mit den Schritten:
Herstellen (20) einer Formmasse mit mindestens den Anteilen Aluminiumoxid (10) und Aluminiumsilicat (12) unter Zugabe kolloidaler Kieselsäurelösung (14),
Vergießen (22) der Formmasse unter Vibration,
Sprunghaftes Absenken (24) der Temperatur der Formmasse, sowie Trocknen und Brennen (26) der vergossenen Formmasse.

13. Verfahren nach Anspruch 12,
bei dem in der Formmasse ein Gewichtsanteil von mehr als zirka 50% Aluminiumoxid (10) und ein Gewichtsanteil von weniger als zirka 50% Aluminiumsilicat (12) gemischt werden.

14. Verfahren nach Anspruch 12 oder 13,
bei dem die Temperatur beim sprunghaften Absenken (24) auf weniger als zirka 0°C gesenkt und dort insbesondere über einen Zeitraum von mehr als 15 min und weniger als zirka 2,5 h gehalten wird.

15. Verfahren nach einem der Ansprüche 12 bis 14,
bei dem die vergossene Formmasse bei einer Temperatur von zwischen zirka 1300°C und zirka 1650°C gebrannt wird.
